# EUROPEAN PATENT APPLICATION

(11) **EP 4 763 641 A1**
(43) Date of publication of application: **24.06.2026**
(21) Application number: 25222649.3
(22) Date of filing: 11.12.2025
(51) Int. Cl.: B60W 30/06, B62D 15/02, B60W 50/14

(54) **APPARATUS AND METHOD FOR PROVIDING PARKING ASSISTANCE**

(30) Priority: 19.12.2024 GB 202418665
(71) Applicant: Jaguar Land Rover Limited, Coventry, Warwickshire CV3 4LF (GB)
(72) Inventor: Akmal, Haseeb, Coventry, CV3 4LF (GB); Abraham, Matthew, Coventry, CV3 4LF (GB); Giles, Mark, Coventry, CV3 4LF (GB); Cai, Zhulin, Coventry, CV3 4LF (GB); Denny, Nicholas, Coventry, CV3 4LF (GB); Omar, Abdihafid, Coventry, CV3 4LF (GB)
(74) Representative: Jaguar Land Rover Patents Department

(57) **Abstract**

Aspects of the present invention relate to a control system (200) for a vehicle (100), the control system comprising one or more processors collectively configured to: identify, using one or more sensors (220) of the vehicle, a parking space (302, 502) in proximity to the vehicle; determine a region of interest (350) of the identified parking space; determine, using one or more sensors, that the vehicle is at least partially located within the region of interest; while the vehicle is determined to be at least partially located within the region of interest: determine that one or more conditions are satisfied for outputting an automated parking operation prompt, the one or more conditions comprising a predetermined number of directional changes performed by a user of the vehicle; and output the automated parking operation prompt.

## Description

### TECHNICAL FIELD

The present disclosure relates to an apparatus and method for determining to provide parking assistance. Aspects of the invention relate to a control system, a system, a vehicle and a method.

### BACKGROUND

Manual parking manoeuvres of vehicles may cause problems for a vehicle driver. In cases, the driver may manually initiate a parking manoeuvre into an available parking space, but during the manoeuvre, may encounter difficulty in manoeuvring to park the vehicle within the boundaries of the parking space. This may result in the driver being required to perform a large number of steering and/or directional changes to the vehicle. In some cases, the driver may end up poorly parking the vehicle within the available space, and may leave the vehicle too close to the boundaries of the space, which in some cases may lead to potential vehicle damage.

It is an aim of the present invention to address one or more of the disadvantages associated with the prior art.

### SUMMARY OF THE INVENTION

Aspects and embodiments of the invention provide a control system, a system, a vehicle, and a method as claimed in the appended claims.

According to an aspect of the present invention, there is provided a control system for a vehicle configured to: identify, a parking space in proximity to the vehicle; determine that the vehicle is at least partially located within the parking space; determine that one or more directional change conditions have been satisfied to cause output of an automated parking operation prompt, and output the automated parking operation prompt. Advantageously, when the vehicle is determined to be manoeuvring within the region of interest of the parking space, and a number of driving operations (e.g., gear changes) have been performed by the user whilst in this space, the vehicle determines that the user is having difficulty manually parking within the space, and a prompt may be provided to assist parking.

According to an aspect of the present invention there is provided a control system for a vehicle, the control system comprising one or more processors collectively configured to: identify, using one or more sensors of the vehicle, a parking space in proximity to the vehicle; determine a region of interest of the identified parking space; determine, using one or more sensors, that the vehicle is at least partially located within the region of interest; while the vehicle is determined to be at least partially located within the region of interest: determine that one or more conditions are satisfied for outputting an automated parking operation prompt, the one or more conditions comprising a predetermined number of directional changes performed by a user of the vehicle; and output the automated parking operation prompt. Advantageously, when the vehicle is determined to be manoeuvring within the region of interest of the parking space, and a number of driving operations (e.g., gear changes) have been performed by the user whilst in this space, the vehicle determines that the user is having difficulty manually parking within the space, and a prompt may be efficiently provided so as to pre-empt continued low quality / poor manoeuvring within the space.

According to an aspect of the present invention, there is provided a control system for a vehicle, the control system comprising one or more processors collectively configured to: receive one or more parking space signals from one or more sensors of the vehicle, the one or more parking space signals indicative of identification of a parking space in proximity to the vehicle; determine a region of interest of the identified parking space; receive one or more vehicle location signals from the one or more sensors that the vehicle is at least partially located within the determined region of interest; and in dependence on a predetermined number of directional changes performed by a user of the vehicle while the vehicle is determined to be partially located within the region of interest; output an automated parking operation prompt to indicate availability of parking assistance to the user. Advantageously, a prompt for automated parking is efficiently provided so as to pre-empt continued low quality / poor manoeuvring within the space when the driver is determined to be having difficulty in completing the manoeuvre.

Identifying the parking space may comprise receiving at least one parking space signal from one or more sensors of the vehicle, the at least one parking space signal indicative of identification of a parking space in proximity to the vehicle. Advantageously the act of parking in a parking space may be sensed.

The determined region of interest of the identified parking space may comprise an area encompassing the identified parking space and at least part of a surrounding area of the identified parking space. Advantageously, the region of interest of the parking space and its surrounding area is identified, for determining that the user is attempting to park into the identified space.

To determine the region of interest, the control system may be configured to: in dependence on the received at least one parking space signal, identify the parking space as a space perpendicular to or non-parallel with a current position of the vehicle; calculate a width and a length of the parking space; calculate an area that is between 1 and 2 times in width and between 1 and 2 times in length; and determine the calculated area to be the region of interest. Optionally, the area may be calculated as 1.5 times the width and 1.5 times the length. The calculated area may be centered on the identified parking space as the region of interest. Advantageously, the region of interest of the parking space may be identified in respect of the shape of the space, so as to provide further clarification for determination that the user is attempting to park into the space.

To determine the region of interest, the control system may be configured to: in dependence on the received at least one parking space signal, identify the parking space as a space parallel to a current position of the vehicle; calculate a length and a width of the parking space; calculate an area that is between 1 and 2 times in width, and between 1.5 and 2.5 times in length of the parking space; and determine the calculated area to be the region of interest. Optionally, the area may be calculated as an area 1.5 times the width and 2 times the length. The calculated area may be centered on the identified parking space as the region of interest. Advantageously, the region of interest of the parking space may be identified in respect of the shape of the space, so as to provide further clarification for determination that the user is attempting to park into the identified space.

The control system may be configured to, in dependence on receipt of at least one vehicle location signal indicative of a change in location of the vehicle such that the vehicle is not located within the determined region of interest: receive at least one parking space signal from the one or more sensors of the vehicle indicative of identification of a further parking space in proximity to a current location of the vehicle; and determine the region of interest in respect of the identified further parking space. On determining that the user has not attempted to park in the first identified space, the vehicle continues to receive signalling regarding nearby identified parking spaces, and the vehicle can update and identify a region of interest of the next nearest space. Advantageously, the vehicle determines the region of interest associated with the nearest space into which the user may be attempting to park, to reduce unnecessary processing (e.g., associated with spaces that the user is not intending to park).

The control system may be configured to: determine a secondary region of the region of interest, wherein the secondary region comprises a portion of the identified parking space; and in dependence on receipt of at least one received vehicle location signal: determine that the vehicle is at least partially located in the secondary region based on one or more wheels of a leading wheel axle of the vehicle being located in the secondary region, wherein the leading wheel axle of the vehicle is a wheel axle of the vehicle that is in closest proximity to the identified parking space; and in dependence on the vehicle being at least partially located within the secondary region, output the automated parking operation prompt. Advantageously, the identified secondary region of interest provides a further condition to trigger the prompt that the user is attempting to park in the space.

The portion may comprise less than half of a total area of the identified parking space. The portion may be a proportion of the identified parking space between a first side boundary, a second side boundary and a front boundary of the identified parking space, the front boundary being a closest boundary to the leading wheel axle of the vehicle. Optionally, the portion may be around 40%. Advantageously, the defined portion of the identified space further determines that the user is attempting to park (enter) into the space, so that the prompt may be suitably provided.

The directional change may comprise one or more of: gear changes indicative of controlling a forward and backward movement of the vehicle; and vehicle steering changes indicative of a steering input directional change from the user. Optionally, the number of directional changes may be three. Advantageously, this provides that a prompt is efficiently provided, in view of a balance between unnecessary prompt output, and to pre-empt continued low quality / poor manoeuvring within the space when the user is identified as having difficulty parking.

The control system may be configured to output the automated parking operation prompt in dependence on receipt of a signal indicative of the vehicle being stationary. Advantageously, the prompt may be provided when the vehicle is not moving, such as on receipt of a brake signal, to allow the driver to safely and conveniently review of the prompt.

The control system may be configured to: receive a user input signal indicative of acceptance of the automated parking operation prompt; and output a control signal to cause the vehicle to perform an automated parking operation to complete a parking manoeuvre into the identified parking space. Advantageously, when the user indicates to accept the prompt, the vehicle is caused to automatically complete the parking manoeuvre, thus reducing further low quality / poor manual parking.

The control system may be configured to cease output of the automated parking operation prompt in dependence on one or more of: a predetermined time period elapsing without receiving a user input indicative of acceptance of the automated parking operation prompt; and receiving at least one vehicle location signal indicative of the vehicle no longer being located within the region of interest. Advantageously, the prompt output may be ceased when no input is received from the user, and/or the prompt output may be ceased when the vehicle has moved and/or is no longer looking to park within the initially identified space, to improve efficiency by preventing needless output.

According to an aspect of the present invention, there is provided a system comprising: the control system of any control system disclosed herein, and one or more sensors configured to sense one or more parking spaces in proximity to the vehicle. Optionally, the system may additionally comprise one or more sensors configured to locate that the vehicle is at least partially located within the region of interest.

According to an aspect of the present invention, there is provided a vehicle comprising any control system disclosed herein, or any system disclosed herein.

According to a further aspect of the present invention, there is provided a method for controlling a vehicle, the method comprising: receiving at least one parking space signal from one or more sensors of the vehicle, the at least one parking space signal indicative of identification of a parking space in proximity to the vehicle; determining a region of interest of the identified parking space; receiving at least one vehicle location signal from one or more sensors of the vehicle, that the vehicle is at least partially located within the region of interest; and in dependence on a predetermined number of directional changes performed by a user of the vehicle while the vehicle is determined to be at least partially located within the region of interest; outputting an automated parking operation prompt to indicate availability of parking assistance to the user.

In an aspect of the present invention, there are provided computer readable instructions which, when executed by one or more processors, cause the one or more processors to perform any method disclosed herein.

In an aspect of the present invention, there is provided a computer readable medium comprising computer readable instructions that, when executed by a processor, cause performance of any method disclosed herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a vehicle according to an embodiment of the invention;
Figure 2 shows a control system according to an embodiment of the invention;
Figures 3A-3B show a diagram for determining a vehicle within a region of interest of a parking space according to an embodiment of the invention;
Figures 4A-4B show a diagram for determining a vehicle within a region of interest of a parking space according to an embodiment of the invention;
Figures 5A-5C show a diagram for identifying a region of interest of parking spaces according to an embodiment of the invention;
Figure 6 shows a display of an automated parking operation prompt according to an embodiment of the invention;
Figure 7 shows a system according to an embodiment of the invention; and
Figure 8 shows a method according to an embodiment of the invention.

### DETAILED DESCRIPTION

It is an aim of the present invention to provide an improved system and method for determining to provide parking assistance for completing a parking manoeuvre. Examples of the present invention aim to identify when a driver of a vehicle is having difficulty in manually manoeuvring the vehicle into an identified parking space and to provide the driver with a prompt for initiating an automatic parking operation to complete the parking manoeuvre. The prompt is efficiently provided so as to pre-empt continued poor manoeuvring within the space when the user is identified as having difficulty parking.

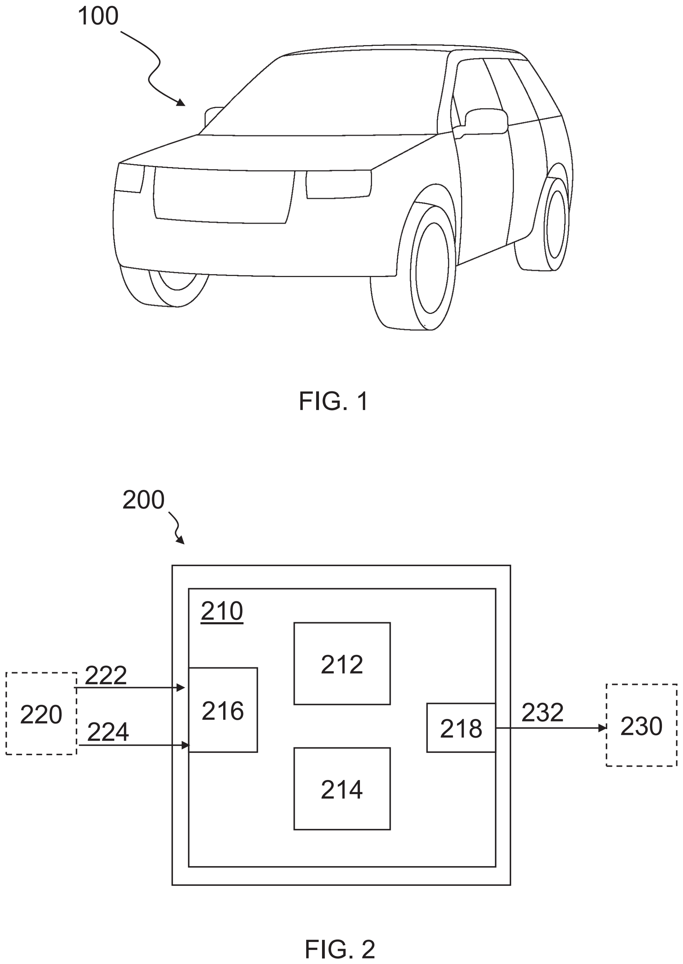

Referring to Figure 1, a vehicle 100 is provided in accordance with embodiments of the invention described herein. The vehicle 100 may receive one or more occupants, where one occupant is a user, otherwise herein termed a driver, of the vehicle 100. The vehicle 100 illustrated in Figure 1 will be understood to be an example, and embodiments and examples described will be understood to comprise other vehicle types than that shown.

Referring to Figure 2, a control system 200 for a vehicle 100 is provided. The control system 200 comprises one or more controllers 210, and the control system 200 is configured to determine to provide an automated parking assist prompt to the driver. The control system 200 as illustrated in Figure 2 comprises one controller, 210, although it will be appreciated that this is merely illustrative. The controller 210 comprises processing means 212 and memory means 214. The processing means 212 may be one or more electronic processing device 212 which operably executes computer-readable instructions. The memory means 214 may be one or more memory device 214. The memory means 214 is electrically coupled to the processing means 212. The memory means 214 is configured to store instructions, and the processing means 212 is configured to access the memory means 214 and execute the instructions stored thereon.

The controller 210 comprises an input means 216 and an output means 218. The input means 216 may comprise an electrical input of the controller 210. The output means 218 may comprise an electrical output of the controller 210. The control system 200 may receive signals 222, 224 via the input means 216 from one or more sensors 220, for example, from one or more sensors 220 comprised within the vehicle 100. The output means 218 is arranged to output a control signal 232 for outputting an automated parking operation prompt (e.g., to an in-vehicle display 230).

The one or more sensors 220 of the vehicle 100 may comprise one or more environment sensors and/or imaging sensors (e.g., camera or imaging devices), for determining and identifying objects and/or features of the surrounding environment of the vehicle 100. In examples, the one or more sensors 220 may comprise one or more ultrasonic proximity sensors (detectors) for emitting radiation, where the reflected radiation may be detected, reflected from one or more features or objects surrounding the vehicle 100.

The control system 200 may use the one or more sensors 220 to sense, or identify, one or more parking spaces in proximity to the vehicle 100 into which the driver may be intending to park the vehicle 100. The control system 200 may receive, from the one or more sensors 220 of the vehicle 100, one or more parking space signals 222 indicative of an identified parking space. In examples, the control system 200 may use the one or more sensors 220 to identify a plurality of parking spaces within proximity to a current location of the vehicle 100, and from the identified spaces, may identify a parking space that is within the closest proximity to the vehicle 100 as an identified parking space. Herein, proximity may be understood to refer to being within a preset distance from the vehicle 100, such that identification of a proximate space may refer to identification of the space being within a set, or defined, distance from the current location of the vehicle 100. In examples, distance may be set in dependence on a resolution, range, or accuracy, of the one or more sensors 220.

In examples, the step of identification of one or more parking spaces, using the one or more sensors 220, may be performed in dependence on one or more parking space identification pre-conditions being met, such that the sensors 220 of the vehicle 100 are efficiently utilised when the driver is determined to be likely looking to park a vehicle. In further examples, the one or more pre-conditions may be set in accordance with when vehicle 100 is determined to be able to safely perform an automated parking operation into the identified space. For example, parking space identification pre-conditions may comprise the control system 200 controlling to determine one or more of: a determination that the vehicle 100 is currently moving at below a pre-defined speed (e.g., below 16kph); a determination that no trailer is connected to the vehicle 100; a determination that no faults are currently indicated as being active; and/or a determination that a slope or gradient of a current road surface is below a preset angle. It will be appreciated that such conditions are examples, and the control system 200 may additionally or alternatively consider further parking space identification conditions.

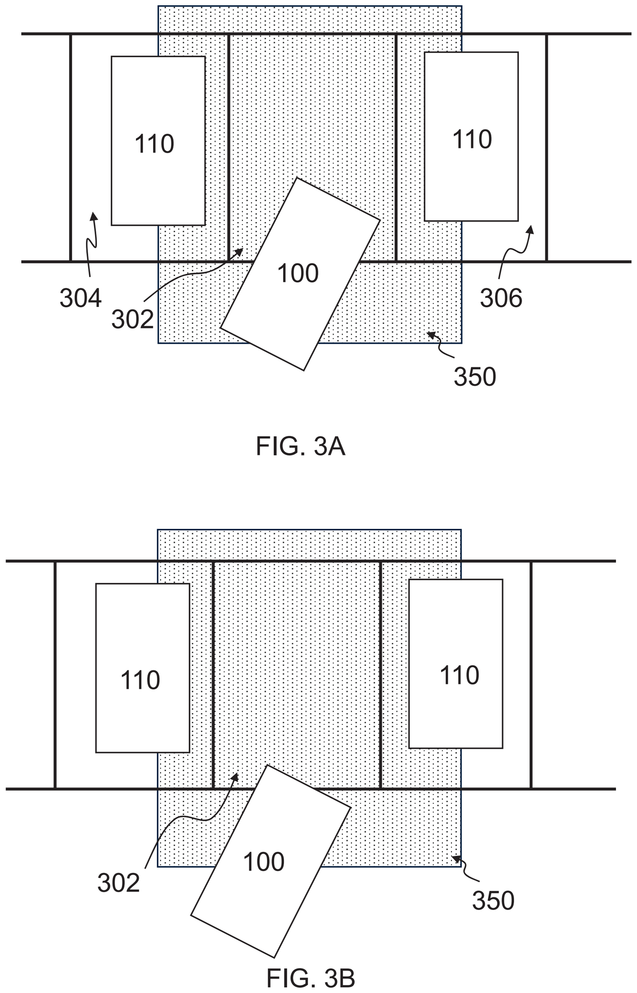

When a parking space has been identified, the control system 200 is configured to determine a region of interest of the identified parking space. Determination of the region of interest is described with reference to Figures 3A-3B.

Figures 3A-3B show a diagram illustrating determination of a vehicle being within a region of interest of a parking space according to an embodiment of the invention. In particular, Figures 3A-3B illustrate a vehicle 100 being manually driven by a driver into an identified parking space 302. The identified space 302 is shown amongst a plurality of other spaces (spaces 304; 306, which, by way of example, are shown occupied by vehicles 110). The control system 200 may determine a region of interest 350 associated with the identified parking space 302. The region of interest 350 comprises an area encompassing the identified parking space 302 and at least part of a surrounding area of the identified parking space 302. The surrounding area may comprise an area adjacent to at least one of identified boundaries of the parking space, and in examples, may overlap a surrounding area of all of the identified boundaries of the parking space 302. As shown in the example of Figure 3A, the surrounding area may overlap side, front and rear boundaries of the parking space, and by example, extend to overlap one or more adjacent parking spaces 304, 306.

Using the one or more sensors 220, the control system 200 may determine that the vehicle 100 is at least partially located within the region of interest 350. That is, the control system 200 may determine, in dependence on receipt of one or more vehicle location signals 224 from the one or more sensors 220 as described above, that a current location of the vehicle 100 is at least partially within the determined region of interest 350. Herein, by at least partially located, at least a portion of the vehicle 100 may be determined as being located within the determined region of interest 350. For example if a driver of the vehicle 100 performs a forward movement into the space, the part of the vehicle 100 located within the region of interest 350 may be a front part of the vehicle (e.g., a front wheel, part of a front bumper). If the vehicle 100 is reversing into the space, the part of the vehicle 100 located within the space may be a rear part of the vehicle (e.g., a rear bumper, at least one of the rear wheels of the vehicle 100).

Whilst the vehicle 100 is determined to be at least partially located within the region of interest 350, or in other words, when one or more received location signals 224 indicate that the vehicle 100 remains located within this region of interest 350, the control system 200 may determine whether one or more conditions are satisfied for outputting an automated parking operation prompt. The one or more conditions may comprise that a predetermined number of directional changes being performed by the driver of the vehicle 100 whilst the vehicle 100 is located within the region of interest 350. Directional changes may comprise one or more gear changes indicative of controlling a forward and backward movement of the vehicle, where each movement (e.g., a forward movement, a backward movement, as resulting from a gear change) may be considered as one gear change. It will be appreciated that the term "gear change" is applicable to changes between forward and reverse gears, such as in a manual or hybrid vehicle, or changes between a drive and reverse gear (or mode) such as in an electric vehicle. Additionally, or alternatively, the directional changes performed by the user of the vehicle 100 whilst the vehicle 100 is determined to be located within the region of interest 350 may comprise receiving one or more vehicle steering changes indicative of a steering input directional change as performed by the driver.

An example of counting directional changes is illustrated with reference to Figures 3A-3B. With reference to Figure 3A, the driver of the vehicle 100 may have initially manually driven the car forwards into the identified parking space 302 to initiate a parking manoeuvre. Once a part of the vehicle (e.g., any part of the vehicle 100) has entered the region of interest 350, by using the one or more sensors 220, the control system 200 may determine that the vehicle 100 is at least partially located within the determined region of interest 350 and initiate to count a number of directional changes. From the position shown in Figure 3A, the driver may then perform a reverse movement (directional change in a reverse gear) to the location shown in Figure 3B. The vehicle 100 remains located within the region of interest 350. This may be determined (or counted) as one directional change performed by the driver of the vehicle 100.

From the location shown in Figure 3B, the driver of the vehicle 100 may perform a further (forward) directional change to move the vehicle 100 forwards into the parking space (e.g., to a location similar to that of Figure 3A). This may be determined as another directional change. The control system 200 may identify that a predetermined number of directional changes are performed by the driver of the vehicle 100, and based on this number being met, identify that the driver is manually attempting to park in the identified space 302, but may be experiencing difficulty completing the parking manoeuvre, due to the number of directional changes performed. In examples, the predetermined number of directional changes may be three (e.g. a reverse, forward, reverse direction change). However, examples are not limited thereto, and any predetermined number may be set, in consideration of providing efficient and prompt assistance to the driver for completion of the parking manoeuvre.

When the control system 200 determines that the condition for the predetermined number of directional changes is satisfied, it is identified by the control system 200 that the driver may benefit from automated parking assistance, and the control system 200 outputs the automated parking operation prompt. The automated parking operation prompt is indicative of the availability of an automated parking operation within the vehicle 100. An automated parking operation may refer to a parking operation as performed, either autonomously or semi-autonomously, by the vehicle 100 to manoeuvre the vehicle 100 into a parking space. In an autonomous parking operation, the vehicle 100 may complete a parking manoeuvre without input or control from the user. In a semi-autonomous operation, the vehicle 100 may require some level of input from the user (e.g., the vehicle 100 may indicate to the user to perform a gear or mode change).

The control system 200 may be configured to receive, e.g., by receiving means 216, a user input signal indicative of acceptance of the automated parking operation prompt. On receipt of the acceptance signal, the control system 200 may be configured to output, e.g. by output means 218, a control signal to cause the vehicle 100 to perform the automated parking operation to complete the parking manoeuvre into the identified parking space.

The control system 200 may further receive at least one vehicle location signal 224 indicative of a change in location of the vehicle such that the vehicle 100 is not, or is no longer, located within the determined region of interest 350. For example, a driver of the vehicle 100 may have initially driven the vehicle 100 into the identified parking space 302, but changed their mind, and moved the vehicle 100 out of the identified parking space and out of the region of interest 350. The control system 200 may cease to identify (or stop counting) the number of directional changes performed if the vehicle 100 is determined to leave the region of interest 350. In such cases, any count of the number of directional changes performed may be reset, and re-counted in dependence on the vehicle 100 entering any subsequent region of interest (a same region of interest of the same parking space, or a region of interest associated with a different parking space).

In examples when the vehicle 100 is not located within a determined of interest 350, the control system 200 may subsequently receive at least one parking space signal 222 from the one or more sensors 220 of the vehicle 100 indicative of identification of a further parking space in proximity to a current location of the vehicle 100. The control system 200 may then determine the region of interest in respect of the identified further parking space. This identified further parking space, and associated region of interest, may replace any previously identified proximate parking space and determined region of interest. In other words, as the vehicle 100 continues to be driven, the control system 200, using the one or more sensors 220 of the vehicle 100, may control to identify a proximate parking space (for example, may identify a closest parking space within the preset distance of the vehicle), and a region of interest associated with this identified parking space.

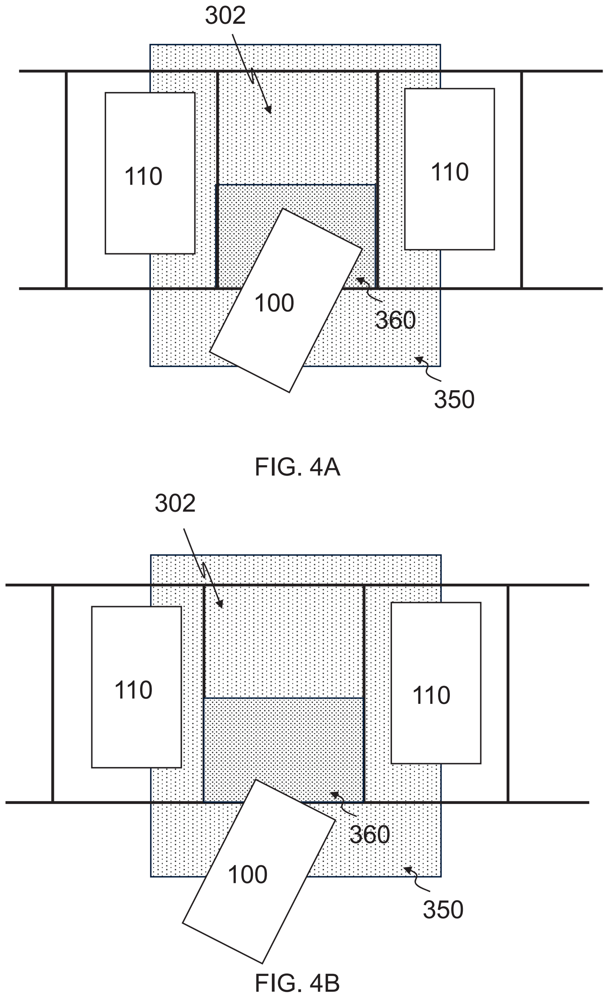

Figures 4A-4B illustrate a diagram for identifying a region of interest of a parking space according to an embodiment of the invention. Referring to Figure 4A, and similarly to Figures 3A-3B, a parking space 302 has been identified, and a region of interest 350 has been determined for the associated parking space 302. However, in addition to the example shown in Figure 3A-3B, the control system 200 may determine a secondary region 360 of the region of interest 350. The secondary region 360 comprises a portion of an area of the identified parking space 302. In examples, the portion of the secondary region 360 may comprise less than half of a total area (in examples, around 40%) of the identified parking space 302. The portion may be a proportion of the identified parking space 302 between a first side boundary, a second side boundary and a front boundary of the identified parking space 302, where the the front boundary being a closest boundary to a leading wheel axle of the vehicle 100 on entering the parking space 302.

The control system 200 may determine whether one or more conditions for outputting the prompt are satisfied based upon determining that the vehicle is at least partially located (e.g., remains located) in this secondary region 360. By being located within this region of the identified parking space 302, the control system 200 may more accurately identify that the user is attempting to manually park within the identified space. The control system 200 may determine that the vehicle 100 is at least partially located in the secondary region 360 based on one or more wheels of a leading wheel axle of the vehicle 100 being located in the secondary region 360, where the leading wheel axle of the vehicle is a wheel axle of the vehicle 100 that is in closest proximity when entering the identified parking space 302. In other words, in dependence on the at least one received vehicle location signal 224 indicating that the vehicle 100 is located within the secondary region 360, the control system 200 may determine that the one or more conditions are satisfied for outputting the automated parking operation prompt, where the one or more conditions comprise that a predetermined number of directional changes are performed whilst the vehicle 100 is located within this region 360. On determining that one or more conditions are met, the control system 200 controls to output the automated parking operation prompt.

With reference to any of the examples detailed above, while the vehicle 100 is determined to be at least partially located within the region of interest 350, and, in some examples also within the secondary region 360, the control system 200 may determine whether one or more additional conditions are met for outputting the parking operation prompt. The conditions may further include one or more of the following described examples.

The control system 200 may identify, as a condition, that the vehicle 100 is under manual control (driven) by the driver into the region of interest 350. Advantageously, it can be identified that the user may benefit from automated parking assistance, and determine to output the automated parking operation prompt.

As a condition, the control system 200 may receive a signal indicative of the vehicle 100 being stationary, and determine to output the automated parking operation prompt in dependence on receipt of this signal. In examples, this stationary signal may be a brake signal received responsive to a driver input to a brake pedal of the vehicle 100. Advantageously, this provides for the driver to safely and conveniently review and accept the prompt.

As a condition, the control system 200 may determine to output the automated parking operation prompt in dependence on a parking prompt being identified as enabled within a parking setting of the vehicle 100.

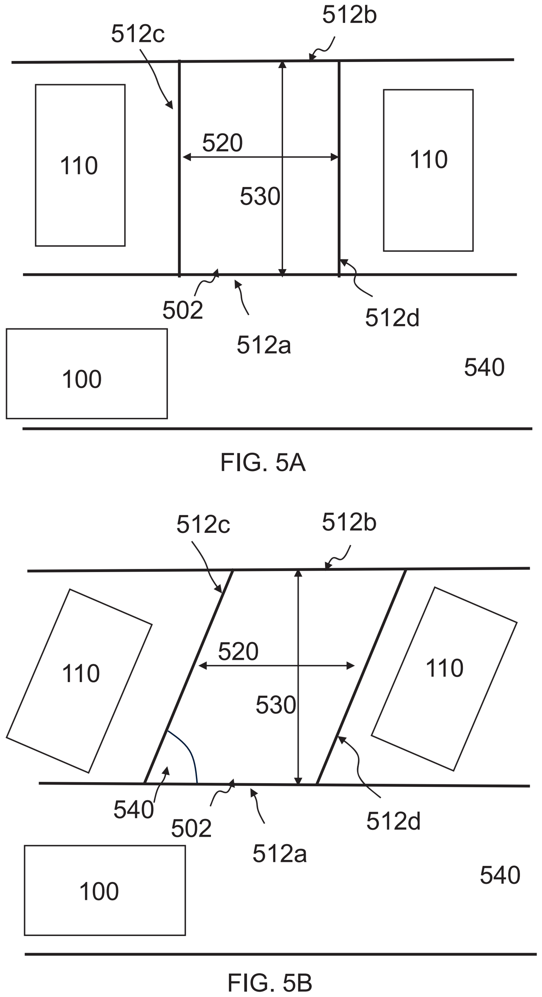

It will be appreciated that parking spaces may have different shapes, and orientations, in respect of the vehicle 100 entering the space. Examples of determining a region of interest based on an identified parking space having different orientations will be described relevant to Figure 5A-5C. Herein, the described parking spaces may be interpreted with reference to the preceding Figures 1 to 4A-B (e.g., in view of having identified a parking space 302, and region of interest 350).

Figures 5A-5C show a diagram for identifying a region of interest of parking spaces according to embodiments of the invention.

In Figure 5A, a vehicle 100 may approach a parking space 502 when travelling along road, or path, 540 (e.g. within an aisle of a carpark). The control system 200 may receive at least one parking space signal 222 from the one or more sensors 220 of the vehicle 100. Based on the received parking space signal 222, the control system may identify the space as being a perpendicular space to a current position of the vehicle 100. In the example of Figure 5A, the identified parking space 502 may be substantially perpendicular to the road 540, and therefore, to the current position of the vehicle 100 on the road 540. In other words, a length of the identified parking space 502 (from an entry boundary 512a to a rear boundary 512b) may be substantially perpendicular to a longitudinal axis of the vehicle (e.g., a length of the vehicle) as positioned on the road 540 prior to beginning the parking manoeuvre into the parking space. The control system 200 may calculate a width 520 and a length 530 of the identified parking space 502. Herein, a width 520 may be defined as the distance between two side boundaries 512c; 512d, and a length may be defined as the distance between an entry boundary 512a and opposite rear boundary 512b of the parking space 502. These measurements are used to calculate a region of interest (e.g., the region of interest 350 of Figures 3A-3B) that encompasses the area of the parking space 502, and a surrounding area of the identified parking space. For example, an area may be calculated that is between 1 and 2 times the width, and between 1 and 2 times the length. In an example, this may be 1.5 times the width and 1.5 times the length. The calculated area, to encompass the area of the parking space and at least part of the surrounding area, is determined as the region of interest. The calculated area may be centered on the parking space, as the determined region of interest.

In Figure 5B, the vehicle 100 may approach a parking space 502, and the control system 200 may receive at least one parking space signal from the one or more sensors 220 of the vehicle 100, and identify the space as being at an angle (an angled space) to a current position of the vehicle 200. That is, the space may be identified to be at an angle 540 (e.g., an angle of less than 90 degrees) to the road 540, and the current position of the vehicle 100. Similarly to Figure 5A, the control system 200 may calculate an area that is between 1 and 2 times the width 520, and between 1 and 2 times the length 530. In examples, this may be 1.5 times the width and 1.5 times the length. The calculated area is determined as the region of interest.

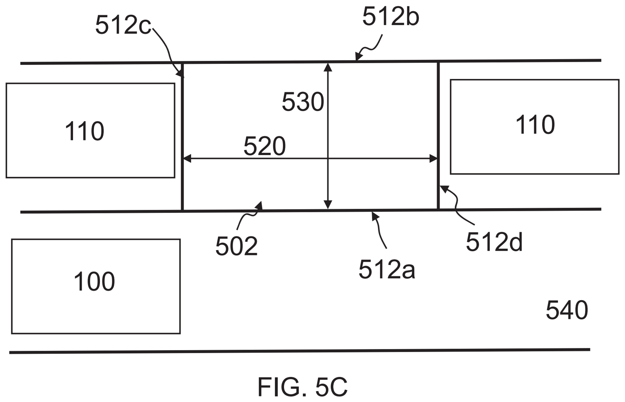

In Figure 5C, the vehicle 100 may approach a parking space 502, and the control system 200 may receive at least one parking space signal 222 from the one or more sensors 220 of the vehicle 100, and identify the space as being substantially parallel to a current position of the vehicle 100 on the road 540. A parallel space may be understood as having a width 520, taken between the side boundaries 512c, 512d, that is substantially parallel to a current position of the vehicle 100 on the road 540. In other words, a width 520 of the identified parking space 502 may be substantially parallel to the longitudinal axis of the vehicle (e.g., a length of the vehicle) prior to beginning the parking manoeuvre into the parking space. The control system 200 may calculate a width 520 and a length 530 (e.g., between entry boundary 512a and opposite rear boundary 512b) of the identified parking space 502. For the identified parking space, an area may be calculated that is between 1 and 2 times the width, and between 1.5 and 2.5 times the length. In examples, this is calculated to be 1.5 times the width and 2 times the length. The calculated area, so as to encompass the area of the parking space and at least part of the surrounding area, is determined as the region of interest. The calculated area may be centered on the parking space as the determined region of interest.

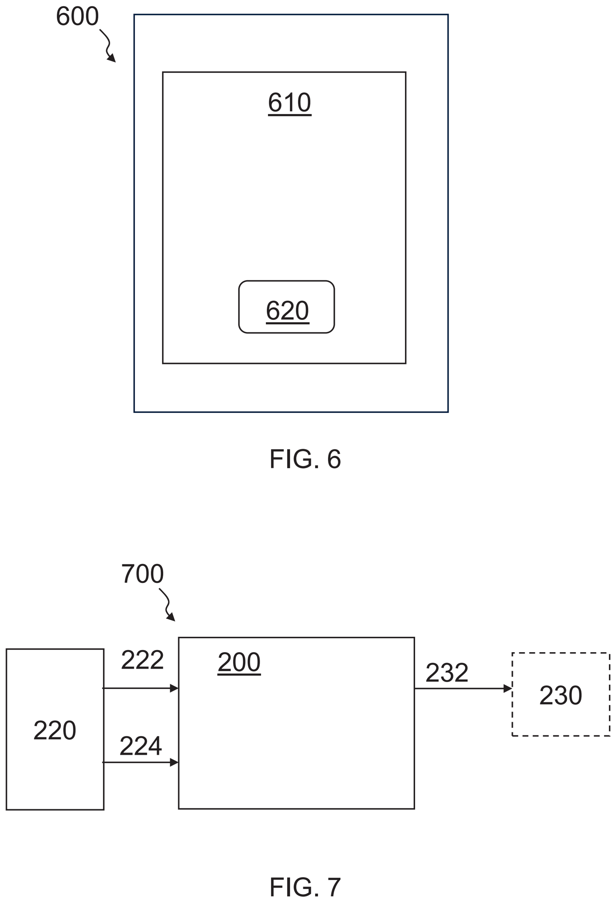

Figure 6 illustrates an automated parking operation prompt, according to an embodiment of the invention. Herein, the automated parking operation prompt 620 may be visually displayed on, or within, a parking display visual 610 of an in-vehicle display 600. The automated parking operation prompt 620 may be displayed as a selectable button 620 (e.g., on a user interface of the in-vehicle display 600). On receipt of a user input signal indicative of acceptance, for example, when the driver selects the displayed button for automated parking operation prompt 610, the control system 200 may output the control signal to cause the vehicle 100 to perform the automated parking operation.

Relevant to the examples discussed herein with reference to any of the preceding Figures, the control system 200 may be configured to cease output of the automated parking operation prompt, based on one or more prompt removal conditions being met. For example, if a predetermined time period elapses without receiving a user input indicative of acceptance of the automated parking operation prompt, the control system 200 may cease output of the automated parking operation prompt. Additionally, or alternatively, the control system 200 may cease output of the automated parking operation prompt in dependence on receiving at least one vehicle location signal 224 indicative of the vehicle no longer being located within the region of interest 350. In a further example, the control system 200 may cease output of the automated parking operation in dependence of a signal indicative of the vehicle 100 no longer being determined as stationary. In this example, a signal indicative of a user input to a brake pedal may be removed, or a signal received from an accelerator pedal received, such that the vehicle 100 is identified to be moving.

In further examples, the control system 200 may be configured to cease output of the automated parking operation prompt. In respect of the above examples, if the automated parking operation prompt is a visual display prompt 620, such as shown in Figure 6, the control system 200 may control to cease displaying the prompt. The control system 200 may be configured to cease output if the vehicle 100 is determined to move out of the region of interest 350. That is, based on receiving one or more vehicle location signals 224, the control system 200 may determine that the vehicle 100 has moved out of the region of interest 350. The determination may be in dependence on a part of the vehicle moving out of the region of interest 350. In examples, the part of the vehicle 100 may be a wheel of the leading wheel axle of the vehicle 100, e.g., the wheel axel initially first entering the parking space 302, moving out of the region of interest 350. In examples, when a secondary region 360 has been determined, the control system 200 may be configured to cease output of the automated parking operation prompt if the vehicle 100 (e.g., a part of the vehicle 100) is determined to move out of the secondary region 360. Advantageously, the prompt output may be ceased when the driver is no longer looking to park within the space, to improve efficiency by reducing needless output.

Figure 7 illustrates a system 700 which comprises any control system 200 in the examples described herein, with reference to the preceding Figures and one or more sensors 220 of vehicle 100. The one or more sensors 220 may comprise sensors configured to sense, or identify, one or more parking spaces in proximity to the vehicle 100. The one or more sensors 220 (e.g., at least one of one or more sensors 220), as comprised within system 700, may be further configured to determine a current location of the vehicle 100. Optionally, the system may comprise a display means 230 (e.g., an in-vehicle display 230) for outputting an automated parking operation prompt.

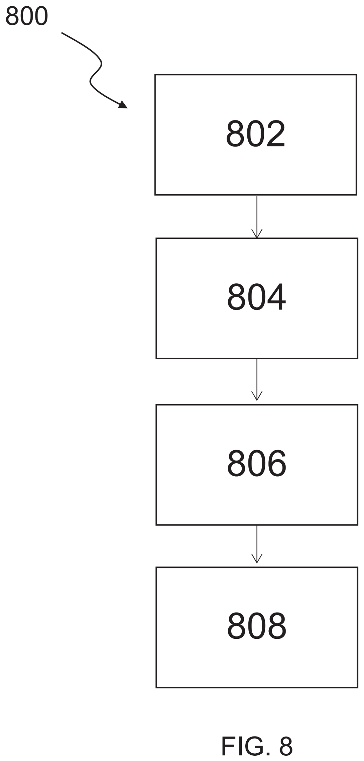

Figure 8 illustrates a method 800 for controlling a vehicle 100, such as the vehicle 100 illustrated in Figure 1. In particular, the method 800 is a computer-implemented method 800 for controlling the vehicle 100. The method 800 comprises receiving at step 802, at least one parking space signal from one or more sensors 220 of the vehicle 100, the at least one parking space signal 222 indicative of identification of a parking space in proximity to the vehicle; determining at step 804, a region of interest of the identified parking space; receiving at step 806, at least one vehicle location signal 224 from one or more sensors 220 of the vehicle 100, that the vehicle 100 is at least partially located within the region of interest; and in dependence on a predetermined number of directional changes performed by a user of the vehicle 100 while the vehicle 100 is determined to be at least partially located within the region of interest; at step 808, outputting an automated parking operation prompt to indicate availability of parking assistance to the user.

The method 800 may be performed by the control system 200 illustrated in Figure 2, and as described in the preceding examples. In particular, the memory 214 may comprise computer-readable instructions which, when executed by the processor 212, perform the method 800 according to an embodiment of the invention.

It will be appreciated that various changes and modifications can be made to the present invention without departing from the scope of the present application.

## Claims

1. A control system for a vehicle, the control system comprising one or more processors collectively configured to:
identify, using one or more sensors of the vehicle, a parking space in proximity to the vehicle;
determine a region of interest of the identified parking space;
determine, using one or more sensors, that the vehicle is at least partially located within the region of interest;
while the vehicle is determined to be at least partially located within the region of interest:
determine that one or more conditions are satisfied for outputting an automated parking operation prompt, the one or more conditions comprising a predetermined number of directional changes performed by a user of the vehicle; and
output the automated parking operation prompt.

2. The control system as claimed in claim 1, wherein identifying the parking space comprises receiving at least one parking space signal from one or more sensors of the vehicle, the at least one parking space signal indicative of identification of a parking space in proximity to the vehicle.

3. The control system as claimed in claim 1 or claim 2, wherein the determined region of interest of the identified parking space comprises an area encompassing the identified parking space and at least part of a surrounding area of the identified parking space.

4. The control system as claimed in claim 2, wherein to determine the region of interest, the control system is configured to:
in dependence on the received at least one parking space signal, identify the parking space as a space perpendicular to or non-parallel with a current position of the vehicle;
calculate a width and a length of the parking space;
calculate an area that is between 1 and 2 times in width and between 1 and 2 times in length of the parking space; and
determine the calculated area to be the region of interest.

5. The control system as claimed in claim 2, wherein to determine the region of interest , the control system is configured to:
in dependence on the received at least one parking space signal , identify the parking space as a space parallel to a current position of the vehicle;
calculate a length and a width of the parking space;
calculate an area that is between 1 and 2 times in width, and between 1.5 and 2.5 times in length of the parking space; and
determine the calculated area to be the region of interest.

6. The control system as claimed in any preceding claim, configured to:
in dependence on receipt of at least one vehicle location signal indicative of a change in location of the vehicle such that the vehicle is not located within the determined region of interest :
receive at least one parking space signal from the one or more sensors of the vehicle indicative of identification of a further parking space in proximity to a current location of the vehicle; and
determine the region of interest in respect of the identified further parking space.

7. The control system as claimed in claim 3, configured to:
determine a secondary region of the region of interest, wherein the secondary region comprises a portion of the identified parking space; and
in dependence on receipt of at least one received vehicle location signal:
determine that the vehicle is at least partially located in the secondary region based on one or more wheels of a leading wheel axle of the vehicle being located in the secondary region, wherein the leading wheel axle of the vehicle is a wheel axle of the vehicle that is in closest proximity to the identified parking space; and
in dependence on the vehicle being at least partially located within the secondary region, output the automated parking operation prompt.

8. The control system as claimed in claim 7, wherein:
the portion comprises less than half of a total area of the identified parking space; and
the portion is a proportion of the identified parking space between a first side boundary, a second side boundary and a front boundary of the identified parking space, the front boundary being a closest boundary to the leading wheel axle of the vehicle.

9. The control system as claimed in any preceding claim, wherein the directional changes comprise one or more of:
gear changes indicative of controlling a forward and backward movement of the vehicle; and
vehicle steering changes indicative of a steering input directional change from the user.

10. The control system as claimed in any preceding claim, configured to output the automated parking operation prompt in dependence on receipt of a signal indicative of the vehicle being stationary.

11. The control system as claimed in any preceding claim, wherein the control system is configured to:
receive a user input signal indicative of acceptance of the automated parking operation prompt; and
output a control signal to cause the vehicle to perform an automated parking operation to complete a parking manoeuvre into the identified parking space.

12. The control system as claimed in claim 11, wherein the control system is configured to cease output of the automated parking operation prompt in dependence on one or more of:
a predetermined time period elapsing without receiving a user input indicative of acceptance of the automated parking operation prompt; and
receiving at least one vehicle location signal indicative of the vehicle no longer being located within the region of interest.

13. A system comprising:
the control system as claimed in any preceding claim; and
one or more sensors configured to sense one or more parking spaces in proximity to the vehicle.

14. A vehicle comprising the system as claimed in claim 13 or the control system as claimed in any of claims 1 to 12.

15. A method for controlling a vehicle, the method comprising:
receiving at least one parking space signal from one or more sensors of the vehicle, the at least one parking space signal indicative of identification of a parking space in proximity to the vehicle;
determining a region of interest of the identified parking space;
receiving at least one vehicle location signal from one or more sensors of the vehicle, that the vehicle is at least partially located within the region of interest; and
in dependence on a predetermined number of directional changes performed by a user of the vehicle while the vehicle is determined to be at least partially located within the region of interest,
outputting an automated parking operation prompt to indicate availability of parking assistance to the user.
